# EUROPEAN PATENT SPECIFICATION

(11) **EP 4 394 176 B1**
(45) Date of publication and mention of the grant of the patent: **25.03.2026**
(21) Application number: 21954536.5
(22) Date of filing: 26.08.2021
(51) Int. Cl.: F03D 1/06, F01D 5/28, B32B 3/30, B32B 33/00, B32B 21/10, B32B 37/02, B29C 70/68, B29D 99/00, B29L 31/08

(54) **REINFORCED CORE MATERIAL FOR A WIND GENERATOR BLADE AND PREPARATION METHOD THEREFOR**
VERSTÄRKTES KERNMATERIAL FÜR EIN WINDGENERATORBLATT UND HERSTELLUNGSVERFAHREN DAFÜR
MATÉRIAU DE NOYAU RENFORCÉ POUR UNE PALE D'ÉOLIENNE ET SON PROCÉDÉ DE PRÉPARATION

(43) Date of publication of application: 03.07.2024
(73) Proprietor: Envision Energy Technology Pte Ltd., 079903 Singapore (SG)
(72) Inventor: ZHANG, Jingjing, Wuxi, Jiangsu 214443 (CN); ZHANG, Xiangyang, Wuxi, Jiangsu 214443 (CN); MA, Hao, Wuxi, Jiangsu 214443 (CN); SUI, Jianjun, Wuxi, Jiangsu 214443 (CN); XU, Gang, Wuxi, Jiangsu 214443 (CN); SUN, Jianxu, Wuxi, Jiangsu 214443 (CN)
(74) Representative: Balder IP Law, S.L.
(86) International application number: PCT/CN2021/114661
(87) International publication number: WO 2023/024003

(56) References cited:
- WO-A2-2010/057502
- CN-A- 102 465 844
- CN-A- 110 129 984
- CN-A- 111 605 256
- CN-A- 111 605 256
- US-A1- 2014 234 114

## Description

### FIELD OF TECHNOLOGY

The present disclosure relates to the field of wind power generation technologies, in particular to a reinforced core material for a wind generator blade and a manufacturing method thereof.

### BACKGROUND

Wind generator blades are key parts of a wind generator, each including main spars, a trailing edge, webs, and a shell. The shell is of a sandwich structure formed with a core material and upper and lower skins, and takes up a largest area of a wind generator blade. The core material in the sandwich structure is one of key materials of the wind generator blade.

At present, sandwich materials used in batches for blades mainly include balsa wood and rigid closed-cell foam. The balsa wood has high specific strength and specific modulus, but has unstable raw material supply and price under the influence of various factors. Therefore, the rigid closed-cell foam is mostly used to make the core material. The rigid foam is usually formed by foaming polyethylene terephthalate (PET) or polyvinyl chloride (PVC), and has a big gap with the balsa wood in both material strength and modulus.

The mechanical properties of the foam may be improved by increasing its density, but the resin absorption amount, the blade weight, and the material cost are also greatly increased.

CN111605256A discloses, in paragraphs [0040] to [0054], a composite structure for wind turbine blades comprising core materials and reinforcements. The core materials are spaced apart and distributed side by side. Each of the reinforcements is filled between two adjacent core materials and includes a first reinforcement body and a second reinforcement body alternately distributed. However, CN111605256A merely discloses that the compression modulus of the first reinforcement body is greater than that of the second reinforcement body, without mentioning tensile modulus or tensile strength of the first and second reinforcement bodies, let alone the quantitative relationships for tensile modulus and tensile strengths.

There is thus an urgent need to design a reinforced core material for a wind generator blade that can simultaneously achieve high specific strength and high specific modulus of the core material body, maintain high flexibility of the sandwich structures formed by reinforcements and core material body, further maximize the specific strength and specific modulus of the material while fully considering the overall flexibility of the sandwich structure, and ultimately enhance the safety margin of wind generator blade structure design.

### SUMMARY

The invention is set out in the appended set of claims.

In view of some or all of the problems in the prior art, on the one hand, the present disclosure provides a reinforced core material for a wind generator blade, including:
a core material body; and
reinforcements distributed inside the core material body and including N first reinforcements and M second reinforcements distributed at intervals, where a tensile modulus and a tensile strength of the first reinforcements are greater than a tensile modulus and a tensile strength of the second reinforcements, any one of the first reinforcements is formed by infiltrating K types of fibers in a same or different forms with resin, each of the second reinforcements is a synthetic high polymer, and N, M, and K are natural numbers.

Further, the fibers include glass fibers, carbon fibers, aramid fibers, natural fibers, ultra-high molecular weight polyethylene fibers, and/or basalt fibers.

Further, the fibers are in the form of a fabric, a chopped strand mat, or weftless cloth.

Further, the resin includes thermosetting or thermoplastic resin.

Further, the high polymer includes thermosetting or thermoplastic resin.

Further, the core material body is made from a thermoplastic polymer, a thermosetting polymer, a material containing wood fibers, or a copolymer and a mixture thereof.

Further, a contour of a first surface of the core material body is in a linear shape, a wavy shape, a serrated shape, an irregular shape, or any combination thereof.

Further, there is an angle between any one of the first reinforcements and/or the second reinforcements and the first surface of the core material body.

Further, both the first reinforcements and the second reinforcements are arranged perpendicular to the first surface of the core material body, and a height of the second reinforcements is less than or equal to a thickness of the core material body.

Further, a contour of each of the first reinforcements and/or the second reinforcements is in a rectangular shape, a triangular shape, a trapezoidal shape, a wavy shape, a serrated shape, a grid shape, or any combination thereof.

Further, any one of the first reinforcements and any one of the second reinforcements have a same or different sizes and/or shapes.

On the other hand, the present disclosure provides a method for manufacturing the reinforced core material as described above, including:
infiltrating fibers with resin to obtain first reinforcements;
curing the first reinforcements and a core material body through pressure curing or heat curing to obtain a pre-reinforced core material body; and
forming second reinforcements on the pre-reinforced core material body.

Further, the second reinforcements are manufactured through vacuum infusion, resin transfer molding, extrusion, injection molding, or hand lay-up.

The present disclosure further provides a wind generator blade manufactured from the reinforced core material as described above, the wind generator blade including main spars, webs, and a shell, each of the main spars, the webs, and the shell including a sandwich structure and upper and lower skins, where the sandwich structure is formed by stacking one or more reinforced core materials as described above.

Further, the upper and lower skins are made from a glass fiber or carbon fiber reinforced polymer.

Further, in a direction parallel to a chord direction of the blade, first reinforcements and second reinforcements in the sandwich structure are distributed at intervals.

Further, the number of the second reinforcements between adjacent two of the first reinforcements is any integer.

Further, a distance between adjacent two of the reinforcements is equal or unequal.

Further, in a direction parallel to a length of the blade, the first reinforcements and the second reinforcements in the sandwich structure are distributed at intervals.

Further, the number of the second reinforcements between adjacent two of the first reinforcements is any integer.

Further, a distance between adjacent two of the reinforcements is equal or unequal.

According to the reinforced core material for a wind generator blade provided by the present disclosure, the first and second reinforcements are introduced into the core material body, such that a relatively low infusion density of the core material body is maintained while a specific strength and a specific modulus of the core material body are improved; moreover, the reinforced core material has a high comprehensive cost performance due to few modifications in a forming and processing technology for an existing core material, strong implementability, and less investment in required additional equipment. In addition, the introduction of the second reinforcements may also make the reinforced core material body as a whole flexible. In practical application, it is possible to adjust a gram weight and a type of the fibers in the first reinforcements or adjust types of the resin in the first reinforcements and the second reinforcements as needed, so as to adjust mechanical properties of the reinforced core material body. This is based on the following insight of the inventor: through research, the inventor has found that sandwich structures formed from a material with high strength and modulus and a material with low strength and modulus are alternately distributed in the core material body, such that the sandwich structures have high flexibility while the core material body has high specific strength and specific modulus, thereby improving the safety margin of blade structure design; and through research, the applicant has found that especially when the strength and the modulus are selected as the tensile strength and the tensile modulus, that is, the material with great difference between tensile strength and tensile modulus is selected as the material of the first and second reinforcements, the specific strength and the specific modulus of the material can be maximized, and the flexibility of the sandwich structure as a whole can be taken into account.

According to the reinforced core material for a wind generator blade provided by the present disclosure, by setting the tensile modulus of the first reinforcements to at least 150% of the second reinforcements and the tensile strength of the first reinforcements to at least 150% of the second reinforcements, the core material ensures sufficient tensile support in high-stress blade regions while reducing weight and cost. This quantitative design also aligns with the actual alternating load requirements of blades, avoiding structural instability caused by vague performance differences in prior art.

### BRIEF DESCRIPTION OF THE DRAWINGS

To further illustrate the above and other advantages and features of the embodiments of the present disclosure, more specific descriptions of the embodiments of the present disclosure will be presented with reference to the accompanying drawings. It can be understood that these accompanying drawings only depict typical embodiments of the present disclosure, and therefore will not be considered as a limitation to its scope. In the accompanying drawings, for the sake of clarity, the same or corresponding components will be denoted with the same or similar signs.
FIG. 1 shows a schematic structural diagram of a reinforced core material for a wind generator blade according to one embodiment of the present disclosure;
FIGS. 2a to 2c show schematic structural diagrams of a plurality of reinforced core materials with different contour surfaces according to embodiments of the present disclosure, respectively;
FIGS. 3a to 3e show schematic structural diagrams of a plurality of reinforcements in different shapes according to embodiments of the present disclosure, respectively;
FIGS. 4a to 4c show schematic structural diagrams of a plurality of reinforcements distributed at different angles according to embodiments of the present disclosure, respectively;
FIG. 5 shows a schematic flowchart of a method for manufacturing a reinforced core material for a wind generator blade according to one embodiment of the present disclosure;
FIG. 6 shows a schematic structural diagram of a wind generator blade according to one embodiment of the present disclosure; and
FIGS. 7a to 7c show schematic structural diagrams of sandwich structures of a plurality of different wind generator blades according to embodiments of the present disclosure, respectively.

### DETAILED DESCRIPTION OF THE EMBODIMENTS

In the description below, the present disclosure is described with reference to the embodiments. However, those skilled in the art will recognize that the embodiments may be implemented without one or more specific details or in conjunction with other alternative and/or additional methods, materials, or components. In other cases, well-known structures, materials, or operations are not shown or described in detail so as not to obscure the inventive point of the present disclosure. Similarly, specific quantities, materials, and configurations are described for explanatory purposes in order to provide a comprehensive understanding of the embodiments of the present disclosure. However, the present disclosure is not limited to these specific details. In addition, it should be understood that the embodiments shown in the accompanying drawings are illustrative representations and are not necessarily drawn to correct scale.

In this specification, reference to "one embodiment" or "the embodiment" means that specific features, structures, or characteristics described in combination with the embodiment are included in at least one embodiment of the present disclosure. The phrase "in one embodiment" occurring throughout this specification does not necessarily refer to the same embodiment.

It should be noted that the embodiment of the present disclosure describes the process steps in a specific order, but this is only for the purpose of describing the specific embodiment, rather than defining the sequence of the steps. On the contrary, in different embodiments of the present disclosure, the sequence of the steps may be adjusted according to the adjustment of the process.

A sandwich material with stable raw material supply, controllable cost, and mechanical properties capable of meeting requirements is provided in order to manufacture a wind generator blade. The present disclosure improves an existing core material and a manufacturing method thereof, and provides a reinforced core material for a wind generator blade and a manufacturing method thereof. The solution of the present disclosure is further described below in conjunction with the accompanying drawings and the embodiments.

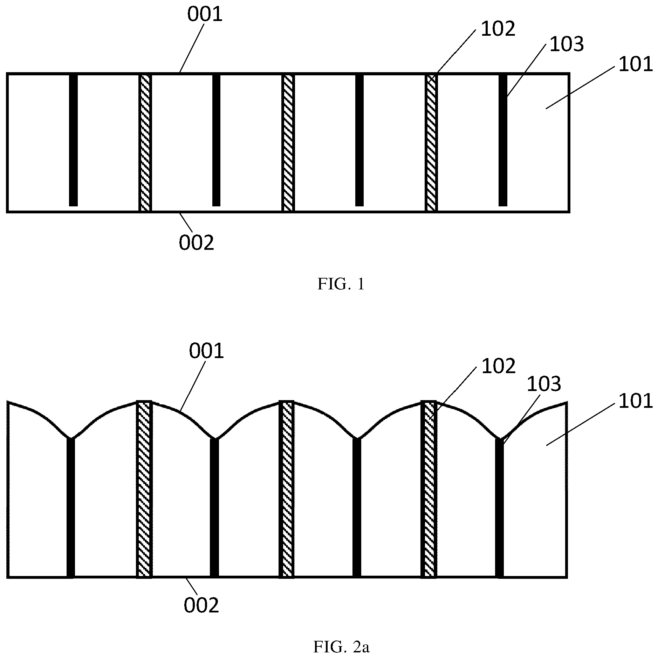

FIG. 1 shows a schematic structural diagram of a reinforced core material for a wind generator blade according to one embodiment of the present disclosure. As shown in FIG. 1, a reinforced core material for a wind generator blade includes a core material body 101, first reinforcements 102, and second reinforcements 103. The first reinforcements 102 and the second reinforcements 103 are distributed at intervals inside the core material body 101, where a tensile modulus and a tensile strength of the first reinforcements 102 are significantly greater than a tensile modulus and a tensile strength of the second reinforcements 103. In this application, the term "A is significantly greater than B" refers to A being at least 150% of B, especially over 200%, such as 300%, 400%, 500%, and 1,000%. The first reinforcements 102 and the second reinforcements 103 transversely extend in a length direction of the reinforced core material body 101. In the present disclosure, the term "A is transverse to B" refers to A and B forming an angle greater than 0, such as inclined to or perpendicular to. In one embodiment of the present disclosure, there may be x second reinforcements 103 distributed between any adjacent two of the first reinforcements 102, or y first reinforcements 102 distributed between any adjacent two of the second reinforcements 103, where both x and y are integers greater than or equal to 0. In another embodiment of the present disclosure, a distance between any adjacent two of the reinforcements may be same or different, where the adjacent two of the reinforcements may be two first reinforcements, one first reinforcement and one second reinforcement, or two second reinforcements.

A material of the core material body 101 may include a thermoplastic polymer, a thermosetting polymer, a material containing wood fibers, and a copolymer, a mixture and a modified polymer thereof. The thermoplastic polymer includes polyester, polyvinyl chloride, polyamide, polystyrene, polyacrylate, polyacrylic acid, polyolefin, polycycloolefin, polyacrylonitrile, polyether amide, polyether ester, polycarbonate, polyether, polysulfone, polyketone, polyimide, polyphenyl ester, and a copolymer, a mixture, and a modified polymer thereof; the thermosetting polymer includes epoxy resin, polyurethane, phenolic aldehyde, unsaturated polyester, vinyl, organosilicon, modified silane, cycloolefin, acrylic acid, bismaleimide, allyl resin, furan resin, amino resin, alkyd resin, and a copolymer, a mixture, and a modified polymer thereof; and the material containing wood fibers may include naturally grown balsa wood, paulownia wood, poplar wood, willow wood, elm wood, locust wood, and a composite formed by combining two or more wood fiber materials.

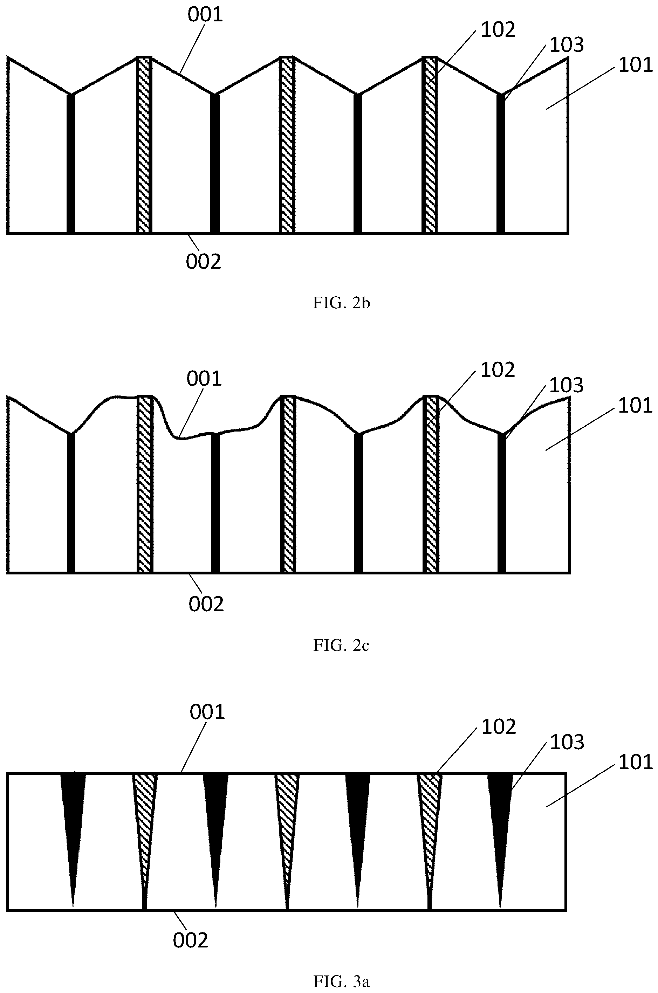

The first reinforcements and the second reinforcements extend from a first surface 001 of the core material body towards its interior, but do not exceed a second surface 002 of the core material body, and in the same reinforced core material body, a length of any one of the first reinforcements and/or the second reinforcements may be same or different, where the first surface and the second surface of the core material body refer to two surfaces perpendicular to a thickness direction of the core material body. In the embodiments of the present disclosure, a contour of the first surface of the core material body may be in various shapes. FIGS. 2a to 2c show schematic structural diagrams of a plurality of reinforced core materials with different contour surfaces according to embodiments of the present disclosure, respectively. As shown in FIG. 1 and FIGS. 2a to 2c, in the embodiments of the present disclosure, the contour of the first surface of the core material body may be in a linear shape (FIG. 1), a wavy shape (FIG. 2a), a serrated shape (FIG. 2b), an irregular shape (FIG. 2c), or any combination thereof.

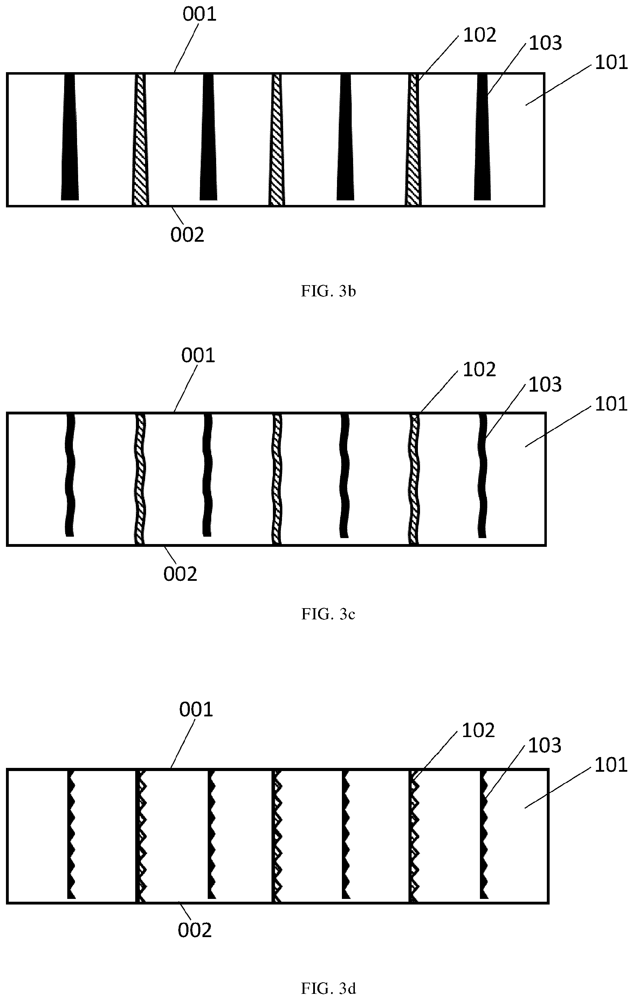

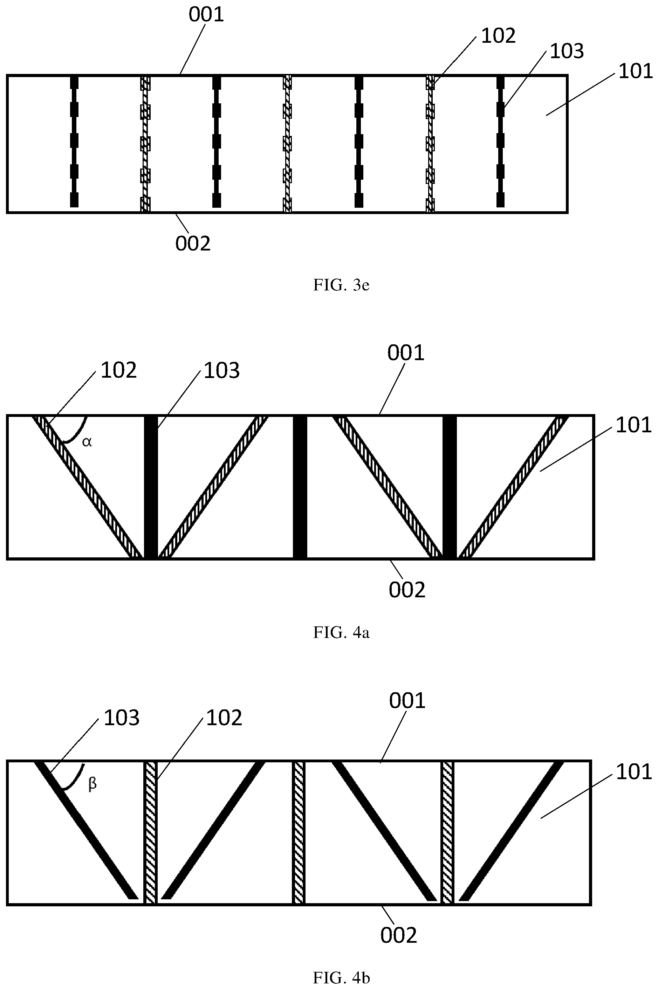

In the embodiments of the present disclosure, contours of the first reinforcements and the second reinforcements are not limited, and in the same reinforced core material body, the contour of any one of the first reinforcements and/or the second reinforcements may be same or different, that is, the same reinforced core material body may include a plurality of first reinforcements and second reinforcements with different or same shape contours. FIGS. 3a to 3e show schematic structural diagrams of a plurality of reinforcements in different shapes according to embodiments of the present disclosure, respectively. As shown in FIG. 1 and FIGS. 3a to 3e, the contour of each of the first reinforcements and/or the second reinforcements may be in a rectangular shape (FIG. 1), a triangular shape (FIG. 3a), a trapezoidal shape (FIG. 3b), a wavy shape (FIG. 3c), a serrated shape (FIG. 3d), a grid shape (FIG. 3e), or any combination thereof.

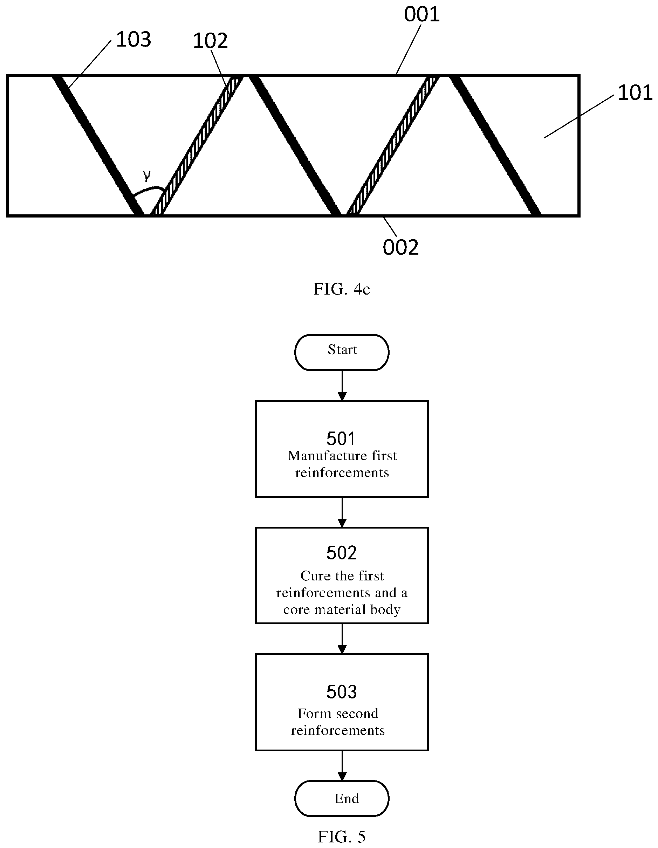

In the embodiments of the present disclosure, the first reinforcements and the second reinforcements may be arranged parallel to the thickness direction of the core material body, that is, perpendicular to the first surface of the core material body, or have a specific angle with the thickness direction of the core material body, and in the same reinforced core material body, an arrangement direction of any one of the first reinforcements and/or the second reinforcements may be same or different. FIG. 1 and FIGS. 4a to 4c show schematic structural diagrams of a plurality of reinforcements distributed at different angles according to embodiments of the present disclosure, respectively. In the embodiment as shown in FIG. 1, both the first reinforcements and the second reinforcements are perpendicular to the first surface of the core material body, and a height of the second reinforcements is less than or equal to a thickness of the core material body. In the embodiment as shown in FIG. 4a, there is an angle α between the first reinforcements and the first surface of the core material body, and the angle α meets 0° ≤ α ≤ 90°. The second reinforcements arranged perpendicular to the first surface of the core material body are provided between the adjacent two of the first reinforcements preferably arranged in a mirror image manner. In other embodiments of the present disclosure, an angle between the adjacent two of the first reinforcements and the second reinforcements provided therebetween may be same or different. In the embodiment as shown in FIG. 4b, there is an angle β between the second reinforcements and the first surface of the core material body, and the angle β meets 0° ≤ β ≤ 90°. The first reinforcements arranged perpendicular to the first surface of the core material body are provided between the adjacent two of the second reinforcements preferably arranged symmetrically with respect to the first reinforcements. In other embodiments of the present disclosure, an angle between the adjacent two of the second reinforcements and the first reinforcements provided therebetween may be same or different. In the embodiment as shown in FIG. 4c, there are angles between the first and second reinforcements and the first surface of the core material body, such that an angle γ is formed between the first and second reinforcements adjacent to each other, where the angle γ meets 0° ≤ γ ≤ 90°. It should be understood that the arrangement direction of the first reinforcements and/or the second reinforcements is not limited to the situation as shown in figure, and in the same reinforced core material body, the arrangement direction of any one of the first reinforcements and/or the second reinforcements may be same or different.

In one embodiment of the present disclosure, any one of the first reinforcements 102 is a fiber reinforced resin composite material formed by infiltrating one or more types of fibers in a same or different forms with resin. In one embodiment of the present disclosure, the fibers include glass fibers, carbon fibers, aramid fibers, natural fibers, ultra-high molecular weight polyethylene fibers, or basalt fibers, which may be in the form of a fabric, a chopped strand mat, or weftless cloth, where if used, the fabric may be a non-curly or curly fabric, the non-curly fabric includes unidirectional, biaxial, and triaxial fabrics, and the curly fabric may be in the form of plain weave, twill weave, satin weave, etc. The fibers in different forms may exist alone or in a composite form in a single layer of first reinforcements. In one embodiment of the present disclosure, the fibers infiltrated with the resin are in the form of a prepreg, an unsaturated polyester glass fiber reinforced sheet molding compound (SMC), a bulk molding compound (BMC), etc. The resin used may be a synthetic high-molecular compound, for example, it may include thermosetting and thermoplastic resin. The thermosetting resin includes epoxy resin, polyurethane resin, unsaturated polyester resin, phenolic resin, vinyl resin, organosilicon resin, modified silane resin, cycloolefin resin, acrylic resin, bismaleimide resin, allyl resin, furan resin, amino resin, alkyd resin, etc.; and the thermoplastic resin includes polyolefin resin, polycycloolefin resin, polyvinyl chloride resin, polystyrene resin, polyacrylic resin, polyacrylate resin, polyamide resin, polyacrylonitrile resin, polyether amide resin, polyether ester resin, polycarbonate resin, polyformaldehyde resin, thermoplastic polyester resin, polyether resin, fluororesin, polyphenylene sulfide resin, polyimide resin, polysulfone resin, polyketone resin, polyphenyl ester resin, and one of modified resin or polymer alloy.

In one embodiment of the present disclosure, the second reinforcement 103 is a synthetic high-molecular compound, for example, it may be thermosetting resin or thermoplastic resin. The thermosetting resin includes epoxy resin, polyurethane resin, unsaturated polyester resin, phenolic resin, vinyl resin, organosilicon resin, modified silane resin, cycloolefin resin, acrylic resin, bismaleimide resin, allyl resin, furan resin, amino resin, alkyd resin, etc.; and the thermoplastic resin includes polyolefin resin, polycycloolefin resin, polyvinyl chloride resin, polystyrene resin, polyacrylic resin, polyacrylate resin, polyamide resin, polyacrylonitrile resin, polyether amide resin, polyether ester resin, polycarbonate resin, polyformaldehyde resin, thermoplastic polyester resin, polyether resin, fluororesin, polyphenylene sulfide resin, polyimide resin, polysulfone resin, polyketone resin, polyphenyl ester resin, and one of modified resin or polymer alloy. In one embodiment of the present disclosure, the second reinforcements 103 may be formed through vacuum infusion, resin transfer molding, extrusion, injection molding, or hand lay-up.

FIG. 5 shows a schematic flowchart of a method for manufacturing a reinforced core material for a wind generator blade according to one embodiment of the present disclosure. As shown in FIG. 5, a method for manufacturing a reinforced core material for a wind generator blade includes the following steps.

First, in step 501, first reinforcements are manufactured. Fibers are infiltrated with resin to obtain the first reinforcements, where the fibers include glass fibers, carbon fibers, aramid fibers, natural fibers, ultra-high molecular weight polyethylene fibers, or basalt fibers, which may be in the form of a fabric, a chopped strand mat, or weftless cloth; if used, the fabric may be a non-curly or curly fabric, the non-curly fabric includes unidirectional, biaxial, and triaxial fabrics, and the curly fabric may be in the form of plain weave, twill weave, satin weave, etc.; and the resin may be thermosetting resin such as epoxy resin, polyurethane resin, unsaturated polyester resin, phenolic resin, vinyl resin, organosilicon resin, modified silane resin, cycloolefin resin, acrylic resin, bismaleimide resin, allyl resin, furan resin, amino resin, and alkyd resin, thermoplastic resin such as polyolefin resin, polycycloolefin resin, polyvinyl chloride resin, polystyrene resin, polyacrylic resin, polyacrylate resin, polyamide resin, polyacrylonitrile resin, polyether amide resin, polyether ester resin, polycarbonate resin, polyformaldehyde resin, thermoplastic polyester resin, polyether resin, fluororesin, polyphenylene sulfide resin, polyimide resin, polysulfone resin, polyketone resin, and polyphenyl ester resin, one of modified resin or polymer alloy, or other high-molecular compounds.

Then, in step 502, the first reinforcements and a core material body are cured. The first reinforcements and the core material body are cured in a way of pressure curing or heat curing to obtain a pre-reinforced core material body, where the pressure curing includes, for example, vacuum bag pressurization, mechanical tooling pressurization, and others, and the heat curing includes contact and non-contact heating, such as hot oven heating, microwave heating, far-infrared heating, and welding.

Finally, in step 503, second reinforcements are formed. The second reinforcements are formed on the pre-reinforced core material body, where the second reinforcements are manufactured through vacuum infusion, resin transfer molding, extrusion, injection molding, or hand lay-up. In one embodiment of the present disclosure, a process for manufacturing the second reinforcements includes:
performing holing and/or grooving in a preset position of the pre-reinforced core material body to obtain deep holes and/or deep and/or shallow grooves; and
filling the deep holes and/or the deep and/or shallow grooves with high-molecular compounds, where the high-molecular compounds may be, for example, thermosetting resin or thermoplastic resin. The thermosetting resin includes epoxy resin, polyurethane resin, unsaturated polyester resin, vinyl resin, phenolic resin, organosilicon resin, modified silane resin, cycloolefin resin, acrylic resin, bismaleimide resin, allyl resin, furan resin, amino resin, alkyd resin, etc.; and the thermoplastic resin includes polyolefin resin, polycycloolefin resin, polyvinyl chloride resin, polystyrene resin, polyacrylic resin, polyacrylate resin, polyamide resin, polyacrylonitrile resin, polyether amide resin, polyether ester resin, polycarbonate resin, polyformaldehyde resin, thermoplastic polyester resin, polyether resin, fluororesin, polyphenylene sulfide resin, polyimide resin, polysulfone resin, polyketone resin, polyphenyl ester resin, and one of modified resin or polymer alloy.

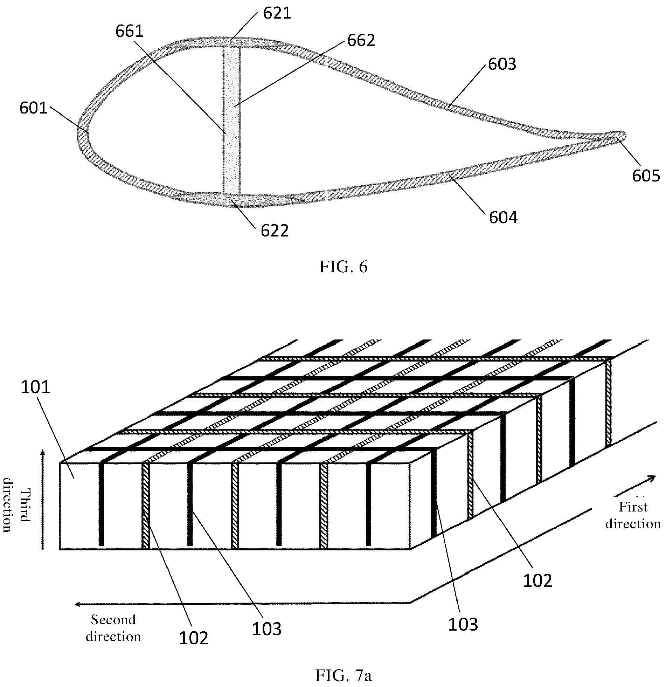

The reinforced core material and the manufacturing method thereof may be applied to the wind generator blade. FIG. 6 shows a schematic structural diagram of a wind generator blade according to one embodiment of the present disclosure. As shown in FIG. 6, a wind generator blade includes a leading edge 601, main spars 621 and 622, a pressure surface 603, a suction surface 604, and a trailing edge 605, and two webs 661 and 662 are fixed between the two main spars 621 and 622, where each of the main spars, the webs, the pressure surface, the suction surface, and the trailing edge includes upper and lower skins and a sandwich structure. The upper and lower skins may be made from a glass fiber or carbon fiber reinforced polymer, and the reinforced core material as previously mentioned may be applied to the sandwich structure, that is, the sandwich structure may be formed by stacking one or more reinforced core materials as previously mentioned.

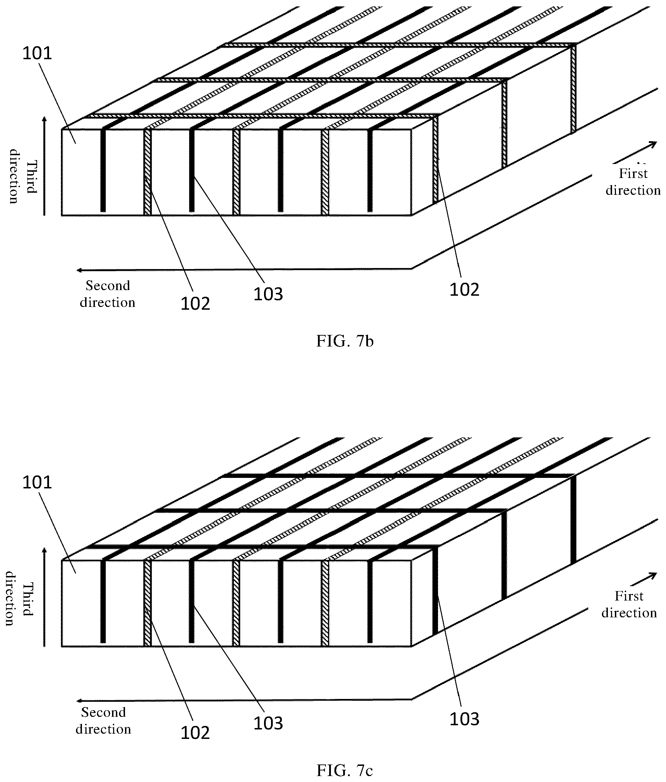

A distribution of first reinforcements and second reinforcements contained in sandwich structures of different wind generator blades or different parts may be same or different. In the present disclosure, a direction parallel to a length of the blade is used as a first direction, a direction parallel to a chord direction of the blade is used as a second direction, and a direction parallel to a thickness of the blade is used as a third direction. In the sandwich structure of the wind generator blade, in a direction parallel to the second direction, the first reinforcements and the second reinforcements may be distributed at intervals, where there may be one or more second reinforcements between each two separate first reinforcements, or there may be one or more first reinforcements between each two separate second reinforcements; and a distance between any two adjacent reinforcements may be equal or unequal, where any two adjacent reinforcements may be two first reinforcements, one first reinforcement and one second reinforcement, or two second reinforcements. Similarly, in a direction parallel to the first direction, the first reinforcements and the second reinforcements may be distributed at intervals, where there may be one or more second reinforcements between each two separate first reinforcements, or there may be one or more first reinforcements between each two separate second reinforcements; and a distance between any two adjacent reinforcements may be equal or unequal, where any two adjacent reinforcements may be two first reinforcements, one first reinforcement and one second reinforcement, or two second reinforcements. In addition, in other embodiments of the present disclosure, in a direction parallel to the first direction, only the first reinforcements or the second reinforcements may be arranged, and a distance between any two adjacent first reinforcements or second reinforcements may be equal or unequal. FIGS. 7a to 7c show schematic structural diagrams of sandwich structures of a plurality of different wind generator blades according to embodiments of the present disclosure, respectively. In the structure as shown in FIG. 7a, in a direction parallel to the first direction and a direction parallel to the second direction, both the first reinforcements and the second reinforcements are arranged at intervals. In the structure shown in FIG. 7b, in a direction parallel to the second direction, both the first reinforcements and the second reinforcements are arranged at intervals, but in a direction parallel to the first direction, only the first reinforcements are arranged. In the structure shown in FIG. 7c, in a direction parallel to the second direction, both the first reinforcements and the second reinforcements are arranged at intervals, but in a direction parallel to the first direction, only the second reinforcements are arranged. It should be understood that in other embodiments of the present disclosure, the arrangement is not limited to the arrangement as shown in figure. For example, the number of the second reinforcements between the two adjacent first reinforcements is not limited to one as shown in figure, but may be multiple, and the number of the second reinforcements between any two adjacent first reinforcements may be different. Moreover, for example, the number of the first reinforcements between the two adjacent second reinforcements is also not limited to one as shown in figure, but may be multiple, and the number of the first reinforcements between any two adjacent second reinforcements may be different.

According to the reinforced core material for a wind generator blade provided by the present disclosure, the first and second reinforcements are introduced into the core material body, such that a relatively low infusion density of the core material body is maintained while a specific strength and a specific modulus of the core material body are improved; moreover, the reinforced core material has a high comprehensive cost performance due to few modifications in a forming and processing technology for an existing core material, strong implementability, and less investment in required additional equipment. In addition, the introduction of the second reinforcements may also make the reinforced core material body as a whole flexible. In practical application, it is possible to adjust a gram weight and a type of the fibers in the first reinforcements or adjust types of the resin in the first reinforcements and the second reinforcements as needed, so as to adjust mechanical properties of the reinforced core material body.

According to the reinforced core material for a wind generator blade provided by the present disclosure, by setting the tensile modulus of the first reinforcements to at least 150% of the second reinforcements and the tensile strength of the first reinforcements to at least 150% of the second reinforcements, the core material ensures sufficient tensile support in high-stress blade regions while reducing weight and cost. This quantitative design also aligns with the actual alternating load requirements of blades, avoiding structural instability caused by vague performance differences in prior art.

## Claims

1. A reinforced core material for a wind generator blade, comprising:
a core material body (101); and
reinforcements distributed inside the core material body (101) and comprising one or more first reinforcements (102) and one or more second reinforcements (103) spaced from one another and alternately distributed, wherein the first reinforcements (102) and the second reinforcements (103)transversely extend in a length direction of the reinforced core material body (101), a tensile modulus and a tensile strength of the first reinforcements (102) are greater than a tensile modulus and a tensile strength of the second reinforcements (103) respectively, and the tensile modulus and tensile strength of the first reinforcements (102) are at least 150% of the tensile modulus and tensile strength of the second reinforcements (103), respectively; each of the first reinforcements (102) is formed by infiltrating one or more types of fibers in a same or different forms with resin, and each of the second reinforcements (103) is a high polymer.

2. The reinforced core material according to claim 1, wherein the tensile modulus of the first reinforcements (102) is more than 150% of the tensile modulus of the second reinforcements (103), and the tensile strength of the first reinforcements (102) is more than 150% of the tensile strength of the second reinforcements (103).

3. The reinforced core material according to claim 1, wherein the fibers comprise glass fibers, carbon fibers, aramid fibers, natural fibers, ultra-high molecular weight polyethylene fibers, and/or basalt fibers.

4. The reinforced core material according to claim 1, wherein the fibers are in the form of a fabric, a chopped strand mat, or weftless cloth.

5. The reinforced core material according to claim 1, wherein the resin comprises thermosetting or thermoplastic resin.

6. The reinforced core material according to claim 1, wherein the high polymer comprises thermosetting or thermoplastic resin.

7. The reinforced core material according to claim 1, wherein the core material body (101) is made from a thermoplastic polymer, a thermosetting polymer, a material containing wood fibers, or a copolymer and a mixture thereof.

8. The reinforced core material according to claim 1, wherein a contour of a first surface (001) of the core material body (101) is in a linear shape, a wavy shape, a serrated shape, an irregular shape, or any combination thereof.

9. The reinforced core material according to claim 1, wherein there is an angle between any one of the first reinforcements (102) and/or any one of the second reinforcements (103) and the thickness direction of the core material body (101).

10. The reinforced core material according to claim 9, wherein a height of the second reinforcements (103) is less than or equal to a thickness of the core material body (101).

11. The reinforced core material according to claim 1, wherein a contour of each of the first reinforcements (102) and/or the second reinforcements (103) is in a rectangular shape, a triangular shape, a trapezoidal shape, a wavy shape, a serrated shape, a grid shape, or any combination thereof.

12. The reinforced core material according to claim 1, wherein any one of the first reinforcements (102) and any one of the second reinforcements (103) have a same or different sizes and/or shapes.

13. A method for manufacturing the reinforced core material according to any one of claims 1 to 11, comprising the following steps:
infiltrating fibers with resin to obtain first reinforcements (102);
curing the first reinforcements (102) and a core material body (101) to obtain a pre-reinforced core material body; and
forming second reinforcements (103) on the pre-reinforced core material body.

14. The method according to claim 13, wherein the forming second reinforcements (103) on the pre-reinforced core material body comprises:
the second reinforcements (103) are manufactured through vacuum infusion, resin transfer molding, extrusion, injection molding, or hand lay-up; and the process for manufacturing the second reinforcements (103) comprises:
performing holing and/or grooving in a preset position of the pre-reinforced core material body to obtain deep holes and/or deep and/or shallow grooves; and
filling the deep holes and/or the deep and/or shallow grooves with high-molecular compounds, wherein the high-molecular compounds is thermosetting resin or thermoplastic resin.

15. A wind generator blade, comprising main spars (621, 622), webs (661, 662), and a shell, each of the main spars (621, 622), the webs (661, 662), and the shell comprising a sandwich structure and upper and lower skins, wherein the sandwich structure is formed by stacking one or more reinforced core materials according to any one of claims 1 to 12.

## Patentansprüche

1. Verstärktes Kernmaterial für ein Windgeneratorblatt, umfassend:
einen Kernmaterialkörper (101); und
Verstärkungen, die innerhalb des Kernmaterialkörpers (101) verteilt sind und eine oder mehrere erste Verstärkungen (102) und eine oder mehrere zweite Verstärkungen (103) umfassen, die voneinander beabstandet und abwechselnd verteilt sind, wobei sich die ersten Verstärkungen (102) und die zweiten Verstärkungen (103) quer in einer Längsrichtung des verstärkten Kernmaterialkörpers (101) erstrecken, ein Zugmodul und eine Zugfestigkeit der ersten Verstärkungen (102) größer sind als ein Zugmodul und eine Zugfestigkeit der zweiten Verstärkungen (103) jeweils, und das Zugmodul und die Zugfestigkeit der ersten Verstärkungen (102) mindestens 150 % des Zugmoduls und der Zugfestigkeit der zweiten Verstärkungen (103) jeweils betragen; jede der ersten Verstärkungen (102) durch Infiltrieren einer oder mehrerer Faserarten in einer gleichen oder unterschiedlichen Form mit Harz gebildet ist, und jede der zweiten Verstärkungen (103) ein synthetisches Hochpolymer ist.

2. Verstärktes Kernmaterial nach Anspruch 1, wobei das Zugmodul der ersten Verstärkungen (102) mehr als 150 % des Zugmoduls der zweiten Verstärkungen (103) beträgt und die Zugfestigkeit der ersten Verstärkungen (102) mehr als 150 % der Zugfestigkeit der zweiten Verstärkungen (103) beträgt.

3. Verstärktes Kernmaterial nach Anspruch 1, wobei die Fasern Glasfasern, Kohlenstofffasern, Aramidfasern, Naturfasern, Polyethylenfasern mit ultrahohem Molekulargewicht und/oder Basaltfasern umfassen.

4. Verstärktes Kernmaterial nach Anspruch 1, wobei die Fasern in Form eines Gewebes, einer Schnittfasermatte oder eines schussfreien Gewebes vorliegen.

5. Verstärktes Kernmaterial nach Anspruch 1, wobei das Harz ein duroplastisches oder thermoplastisches Harz umfasst.

6. Verstärktes Kernmaterial nach Anspruch 1, wobei das Hochpolymer ein duroplastisches oder thermoplastisches Harz umfasst.

7. Verstärktes Kernmaterial nach Anspruch 1, wobei der Kernmaterialkörper (101) aus einem thermoplastischen Polymer, einem duroplastischen Polymer, einem holzfaserhaltigen Material oder einem Copolymer und einer Mischung davon hergestellt ist.

8. Verstärktes Kernmaterial nach Anspruch 1, wobei eine Kontur einer ersten Oberfläche (001) des Kernmaterialkörpers (101) eine lineare Form, eine wellige Form, eine gezackte Form, eine unregelmäßige Form oder eine beliebige Kombination davon aufweist.

9. Verstärktes Kernmaterial nach Anspruch 1, wobei ein Winkel zwischen einer beliebigen der ersten Verstärkungen (102) und/oder einer beliebigen der zweiten Verstärkungen (103) und der Dickenrichtung des Kernmaterialkörpers (101) vorhanden ist.

10. Verstärktes Kernmaterial nach Anspruch 9, wobei eine Höhe der zweiten Verstärkungen (103) kleiner oder gleich einer Dicke des Kernmaterialkörpers (101) ist.

11. Verstärktes Kernmaterial nach Anspruch 1, wobei eine Kontur jeder der ersten Verstärkungen (102) und/oder der zweiten Verstärkungen (103) eine rechteckige Form, eine dreieckige Form, eine trapezförmige Form, eine wellige Form, eine gezackte Form, eine Gitterform oder eine beliebige Kombination davon aufweist.

12. Verstärktes Kernmaterial nach Anspruch 1, wobei eine beliebige der ersten Verstärkungen (102) und eine beliebige der zweiten Verstärkungen (103) gleiche oder unterschiedliche Größen und/oder Formen aufweisen.

13. Verfahren zur Herstellung des verstärkten Kernmaterials nach einem der Ansprüche 1 bis 11, umfassend die folgenden Schritte:
Infiltrieren von Fasern mit Harz, um erste Verstärkungen (102) zu erhalten;
Aushärten der ersten Verstärkungen (102) und eines Kernmaterialkörpers (101), um einen vorverstärkten Kernmaterialkörper zu erhalten; und
Bilden von zweiten Verstärkungen (103) auf dem vorverstärkten Kernmaterialkörper.

14. Verfahren nach Anspruch 13, wobei das Bilden der zweiten Verstärkungen (103) auf dem vorverstärkten Kernmaterialkörper umfasst:
die zweiten Verstärkungen (103) durch Vakuuminfusion, Harzinjektionsverfahren, Extrusion, Spritzgießen oder Handlaminieren hergestellt werden; und das Verfahren zur Herstellung der zweiten Verstärkungen (103) umfasst:
Durchführen von Bohrungen und/oder Nuten an einer voreingestellten Position des vorverstärkten Kernmaterialkörpers, um tiefe Löcher und/oder tiefe und/oder flache Nuten zu erhalten; und
Füllen der tiefen Löcher und/oder der tiefen und/oder flachen Nuten mit hochmolekularen Verbindungen, wobei die hochmolekularen Verbindungen ein duroplastisches Harz oder ein thermoplastisches Harz sind.

15. Windgeneratorblatt, umfassend Hauptholme (621, 622), Stege (661, 662) und eine Schale, wobei jeder der Hauptholme (621, 622), der Stege (661, 662) und der Schale eine Sandwichstruktur und obere und untere Häute umfasst, wobei die Sandwichstruktur durch Stapeln eines oder mehrerer verstärkter Kernmaterialien nach einem der Ansprüche 1 bis 12 gebildet ist.

## Revendications

1. Matériau d'âme renforcé pour une pale d'éolienne, comprenant :
un corps de matériau d'âme (101) ; et
des renforts distribués à l'intérieur du corps de matériau d'âme (101) et comprenant un ou plusieurs premiers renforts (102) et un ou plusieurs seconds renforts (103) espacés les uns des autres et distribués en alternance, dans lequel les premiers renforts (102) et les seconds renforts (103) s'étendent transversalement dans une direction de longueur du corps de matériau d'âme renforcé (101), un module de traction et une résistance à la traction des premiers renforts (102) sont supérieurs à un module de traction et une résistance à la traction des seconds renforts (103) respectivement, et le module de traction et la résistance à la traction des premiers renforts (102) sont d'au moins 150 % du module de traction et de la résistance à la traction des seconds renforts (103), respectivement ; chacun des premiers renforts (102) est formé par infiltration d'un ou plusieurs types de fibres sous une même forme ou sous des formes différentes avec de la résine, et chacun des seconds renforts (103) est un polymère synthétique.

2. Matériau d'âme renforcé selon la revendication 1, dans lequel le module de traction des premiers renforts (102) est supérieur à 150 % du module de traction des seconds renforts (103), et la résistance à la traction des premiers renforts (102) est supérieure à 150 % de la résistance à la traction des seconds renforts (103).

3. Matériau d'âme renforcé selon la revendication 1, dans lequel les fibres comprennent des fibres de verre, des fibres de carbone, des fibres d'aramide, des fibres naturelles, des fibres de polyéthylène à masse moléculaire ultra-élevée et/ou des fibres de basalte.

4. Matériau d'âme renforcé selon la revendication 1, dans lequel les fibres sont sous la forme d'un tissu, d'un mat de fils coupés ou d'un tissu sans trame.

5. Matériau d'âme renforcé selon la revendication 1, dans lequel la résine comprend une résine thermodurcissable ou une résine thermoplastique.

6. Matériau d'âme renforcé selon la revendication 1, dans lequel le polymère synthétique comprend une résine thermodurcissable ou une résine thermoplastique.

7. Matériau d'âme renforcé selon la revendication 1, dans lequel le corps de matériau d'âme (101) est fabriqué à partir d'un polymère thermoplastique, d'un polymère thermodurcissable, d'un matériau contenant des fibres de bois, ou d'un copolymère et d'un mélange de ceux-ci.

8. Matériau d'âme renforcé selon la revendication 1, dans lequel un contour d'une première surface (001) du corps de matériau d'âme (101) présente une forme linéaire, une forme ondulée, une forme dentelée, une forme irrégulière, ou toute combinaison de celles-ci.

9. Matériau d'âme renforcé selon la revendication 1, dans lequel il existe un angle entre l'un quelconque des premiers renforts (102) et/ou l'un quelconque des seconds renforts (103) et la direction d'épaisseur du corps de matériau d'âme (101).

10. Matériau d'âme renforcé selon la revendication 9, dans lequel une hauteur des seconds renforts (103) est inférieure ou égale à une épaisseur du corps de matériau d'âme (101).

11. Matériau d'âme renforcé selon la revendication 1, dans lequel un contour de chacun des premiers renforts (102) et/ou des seconds renforts (103) présente une forme rectangulaire, une forme triangulaire, une forme trapézoïdale, une forme ondulée, une forme dentelée, une forme en grille, ou toute combinaison de celles-ci.

12. Matériau d'âme renforcé selon la revendication 1, dans lequel l'un quelconque des premiers renforts (102) et l'un quelconque des seconds renforts (103) présentent des tailles et/ou des formes identiques ou différentes.

13. Procédé de fabrication du matériau d'âme renforcé selon l'une quelconque des revendications 1 à 11, comprenant les étapes suivantes :
infiltrer des fibres avec de la résine pour obtenir des premiers renforts (102) ;
durcir les premiers renforts (102) et un corps de matériau d'âme (101) pour obtenir un corps de matériau d'âme pré-renforcé ; et
former des seconds renforts (103) sur le corps de matériau d'âme pré-renforcé.

14. Procédé selon la revendication 13, dans lequel la formation des seconds renforts (103) sur le corps de matériau d'âme pré-renforcé comprend :
les seconds renforts (103) sont fabriqués par infusion sous vide, moulage par transfert de résine, extrusion, moulage par injection ou drapage manuel ; et le processus de fabrication des seconds renforts (103) comprend :
réaliser des perçages et/ou des rainurages dans une position prédéfinie du corps de matériau d'âme pré-renforcé pour obtenir des trous profonds et/ou des rainures profondes et/ou des rainures peu profondes ; et
remplir les trous profonds et/ou les rainures profondes et/ou les rainures peu profondes avec des composés macromoléculaires, dans lequel les composés macromoléculaires sont une résine thermodurcissable ou une résine thermoplastique.

15. Pale d'éolienne, comprenant des longerons principaux (621, 622), des âmes (661, 662) et une coque, chacun des longerons principaux (621, 622), des âmes (661, 662) et de la coque comprenant une structure sandwich et des peaux supérieure et inférieure, dans laquelle la structure sandwich est formée par empilement d'un ou plusieurs matériaux d'âme renforcés selon l'une quelconque des revendications 1 à 12.
